# EUROPÄISCHE PATENTANMELDUNG

(11) **EP 4 063 760 A1**
(43) Veröffentlichungstag der Anmeldung: **28.09.2022**
(21) Anmeldenummer: 22163734.1
(22) Anmeldetag: 23.03.2022
(51) Int. Cl.: F24S 25/61, A01G 9/033

(54) **STÜTZE FÜR PV-MODULE, UND GRÜNDACH-UNTERKONSTRUKTION**

(30) Priorität: 23.03.2021 DE 202021101501 U
(71) Anmelder: Wischemann Kunststoff GmbH, 48607 Ochtrup (DE)
(72) Erfinder: Ossendorf, Stefan Hubert, 48607 Ochtrup (DE)
(74) Vertreter: Habbel, Ludwig

(57) **Zusammenfassung**

Bei einer Stütze (1), die dazu bestimmt ist, ein Photovoltaik-Modul auf einem Gründach zu tragen, welches mit Rippen und / oder Vertiefungen aufweisenden Drainageelementen (5) ausgestattet ist, wobei die Stütze (1) einen auf einem Drainageelement (5) aufstellbaren Fuß aufweist sowie zwei Aufnahmen (3), die zur Aufnahme eines Photovoltaik-Moduls oder zur Aufnahme von Modultragleisten bestimmt sind, wird vorgeschlagen, dass der Fuß zwei relativ zueinander bewegliche Fußelemente (4) aufweist, die zwischen einer Haltestellung und einer Freigabestellung beweglich sind, wobei die Fußelemente (4) dazu bestimmt sind, in ihrer Haltestellung die Stütze (1) gegen abhebende Kräfte sichernd an einem Drainageelement (5) festzulegen und in ihrer Freigabestellung eine freie Beweglichkeit der Stütze (1) in Bezug auf das Drainageelement (5) zu ermöglichen.

## Beschreibung

Die Erfindung betrifft eine Stütze einer Gründach-Unterkonstruktion nach dem Oberbegriff des Anspruchs 1, sowie eine unter Verwendung einer solchen Stütze gebildete Gründach-Unterkonstruktion nach Anspruch 10.

Aus der Praxis ist es bekannt, Flachdächer jeweils als sogenanntes Gründach auszugestalten, indem auf dem Flachdach Gewächse angepflanzt werden. Um eine möglichst gleichmäßige Wasserversorgung der Pflanzen zu erreichen, ist es bekannt, Dränageelemente zu verwenden, die typischerweise aus Kunststoff bestehen und je nach Ausgestaltung auch als Retentionskästen oder Bodenplatten des Gründachs bezeichnet werden. Die Dränageelemente dienen erstens dazu, ein Pflanzsubstrat auf dem Dach zu halten, zweitens einen Wasserüberschuss abzuführen, und drittens ein Aufnahmevolumen für einen gewissen Wasservorrat bereitzustellen.

Große Niederschlagsmengen führen dazu, dass große Wassermengen innerhalb kürzester Zeit auf die Dränageelemente gelangen. Durch eine dreidimensionale Topographie, beispielsweise indem über das Dränageelement verteilt eine Vielzahl von Töpfchen oder Näpfen gebildet werden, die durch Trennstege voneinander getrennt sind, wird das Pflanzsubstrat in dem Dränageelement in den jeweiligen Näpfen gehalten und dagegen gesichert, mitsamt den Pflanzen durch die Wassermenge weggespült zu werden. Weiterhin bilden die Näpfe ein Aufnahmevolumen, in welchem das Wasser gesammelt wird, so dass nicht das gesamte Niederschlagswasser innerhalb kürzester Zeit von dem Dränageelement abläuft, sondern vielmehr einen Wasservorrat bildet, der die Pflanzen bis zum nächsten Niederschlag versorgt. Andererseits kann durch die Höhe der Trennstege oder auch durch Einkerbungen, die in den Oberkanten der Trennstege vorgesehen sind, das maximale Wasserniveau innerhalb der Näpfe begrenzt werden, so dass überschüssiges Wasser zuverlässig aus dem Dränageelement ablaufen kann.

Weiterhin ist es aus der Praxis bekannt, auf dem Gründach Photovoltaik-Module (PV-Module) anzuordnen. Mithilfe von Stützen werden die PV-Module nicht nur im Abstand oberhalb der Pflanzen gehalten, sondern auch in einem bestimmten Winkel zur Horizontalen ausgerichtet, der dazu beitragen kann, je nach Aufstellungsort den über den Jahresverlauf erzielbaren solaren Ertrag zu maximieren.

In einer bekannten Ausgestaltung können die Stützen von dem Dränageelement selbst gebildet werden. Wenn das Dränageelement aus Kunststoff in einem Tiefziehverfahren hergestellt ist, bedeutet der sehr große Höhenunterschied zwischen der Grundfläche des Dränageelement und den oberen Enden der Stützen, dass der zunächst als Platte oder Folie bereitgestellte Kunststoff eine erhebliche Materialstärke aufweisen muss, um den Tiefziehvorgang über diesen Höhenunterschied zu ermöglichen und dabei an allen relevanten Stellen eine für die Stabilität ausreichende Materialstärke des fertiggestellten Dränageelements zu gewährleisten.

In einer anderen bekannten Ausgestaltung weisen die Dränageelemente, aus Kunststoff in einem Tiefziehverfahren hergestellt, lediglich Konsolen auf, die zur Montage von separaten Stützen vorgesehen sind. Die ansonsten bei dem Dränageelement vorgesehene Topographie mit Näpfen und Trennstegen ist durch diese Konsolen unterbrochen. Dadurch wird einerseits die Menge des Pflanzsubstrats und der Pflanzen reduziert, die auf dem Dränageelement angeordnet werden können, und andererseits wird durch die Konsolen ein definierter Aufstellungsort vorgegeben, an dem die Stützen montiert werden müssen.

In einer dritten Ausgestaltung ist es bekannt, metallische Stützen zu verwenden, die zugunsten einer stabilen Befestigung mit Gegenhaltern an dem Dränageelement befestigt werden. Der Gegenhaltern kann beispielsweise in Form einer metallischen Platte ausgestaltet sein, die unterhalb des Dränageelements angeordnet wird und mit einem Fußelement einer Stütze verbunden wird. Beispielsweise können sich Gewindebolzen von den Gegenhaltern durch das Dränageelement nach oben erstrecken, so dass ein Fußelement einer Stütze mit dem Gewindebolzen verschraubt werden kann.

Der Erfindung liegt die Aufgabe zugrunde, eine gattungsgemäße Stütze dahingehend zu verbessern, dass diese mit einfachen Mitteln an einem Dränageelement einer Gründach-Unterkonstruktion befestigt werden kann und eine hinsichtlich Herstellung und Transport möglichst preisgünstige Ausgestaltung des Dränageelements ermöglicht. Weiterhin liegt der Erfindung die Aufgabe zugrunde, eine Gründach-Unterkonstruktion anzugeben, dessen Dränageelemente hinsichtlich Herstellung und Transport möglichst preisgünstig ausgestaltet sind, und die eine schnelle, unkomplizierte und vielseitige Montage der Stützen an den Dränageelemente ermöglicht.

Diese Aufgabe wird durch eine Stütze mit den Merkmalen des Anspruchs 1 und durch eine Gründach-Unterkonstruktion nach Anspruch 10 gelöst. Vorteilhafte Ausgestaltungen sind in den Unteransprüchen beschrieben.

Die Erfindung schlägt mit anderen Worten vor, die Stütze separat von dem Dränageelement auszugestalten. Die Stütze weist zwei Fußelemente auf, die relativ zueinander beweglich sind. Sie können zunächst eine sogenannte Freigabestellung einnehmen und aus dieser Freigabestellung, nachdem sie an das Dränageelement angelegt worden sind, in eine Haltestellung gebracht werden, in welcher sie die Stütze an dem Dränageelemente in der Art festlegen, dass die Stütze gegen abhebende Kräfte gesichert ist. In der Freigabestellung hingegen kann die Stütze in Bezug auf das Dränageelement frei bewegt werden, so dass beispielsweise die Stützen unabhängig von den Dränageelementen transportiert werden können. Hierdurch kann eine platzsparende Stapelung gleichartiger Dränageelemente zugunsten möglichst niedriger Transportkosten erreicht werden.

Der vorliegende Vorschlag geht von der Überlegung aus, dass die Dränageelemente üblicherweise eine Topographie aufweisen, die in Art eines Rasters oder eines Rapports eine regelmäßig sich wiederholende Struktur aufweist. Die Fußelemente der Stütze sind an die Topographie des Dränageelements angepasst und können beispielsweise in die Näpfe oder auf die Trennstege gesetzt werden und auf diese Weise dem Dränageelement angelegt werden. Eine weitere Bewegung der Fußelemente bewirkt dann, dass die Fußelemente und damit die gesamte Stütze an dem Dränageelement festgelegt wird und gegen abhebende Kräfte gesichert wird.

Vorteilhaft können die Fußelemente jeweils ein oder mehrere vorspringende Profilelemente aufweisen welches insofern am Fußelement nach außen ragt, dass es an das Dränageelement angelegt wird, wenn die beiden zusammenwirkenden Fußelemente in ihrer Haltestellung bewegt werden. Mittels der Profilelemente können besonders hoher Klemmkräfte erreicht werden, um eine sichere Festlegung der Stütze an dem Dränageelement zu bewirken, z.B. wenn die beiden Fußelemente zangenartig einen Trennsteg des Dränageelements umfassen, oder wenn die beiden Fußelemente im Abstand voneinander in unterschiedlichen Näpfe des Dränageelements eingesetzt und anschließend auseinander bewegt werden, um an zwei voneinander getrennte Trennstege des Dränageelements angepresst zu werden.

Das erwähnte Profilelement kann vorteilhaft eine Spitze aufweisen, die zum Eindringen in das Material des Dränageelements bestimmt ist. Auf diese Weise wird nicht nur ein Klemmdruck zur Halterung der Stütze am Profilelements erreicht, sondern es kann ein regelrechter Formschluss und somit eine sonders gute Sicherung der Stütze gegen abhebende Kräfte ermöglicht werden. Wenn das Profilelements als Rippe ausgestaltet ist, kann die Rippe beispielsweise einen dreieckigen Querschnitt aufweisen, um die Spitze zu bilden. Besonders vorteilhaft kann das Profilelements jedoch als spitz endender Bolzen ausgestaltet sein, so dass größere, linienartige Unterbrechungen des Dränageelements durch das eindringende Profilelement vermieden werden, die entweder zu einer unerwünschten mechanischen Schwächung des Dränageelements führen könnten oder auch zu einer unerwünschten Undichtigkeit, welche die Retentionsfähigkeit des Dränageelements beeinträchtigt. Ein spitzer Bolzen hingegen, insbesondere wenn die Spitze einen kreisförmigen Querschnitt aufweist, kann durch den Anpressdruck hingegen praktisch selbstabdichtend wirken, so dass trotz des Eindringens in das Material des Dränageelements Undichtigkeiten in einem für die Praxis relevanten, unerwünschten Ausmaß vermieden werden können.

In einer vorteilhaften Ausgestaltung sind die Fußelemente in der Art beweglich, dass sie ihren Abstand zueinander vergrößern und auseinander gespreizt werden. Im Vergleich dazu, einen Trennsteg des Dränageelements zangenartig zu umfassen, verteilt sich durch die Spreizbewegung die mechanische Belastung auf zwei voneinander getrennte Trennstege, so dass die mechanische Belastung des Dränageelements verringert wird.

Dabei kann die Spreizbeweglichkeit vorteilhaft in der Art ausgebildet sein, dass die Fußelemente gelenkig miteinander verbunden sind, beispielsweise mittels zweier sich kreuzender, annähernd X-förmig angeordneter Gelenkstreben. Bei einem Druck von oben ist eine solche Stütze bestrebt, die beiden oberen Aufnahmen ebenso weiter voneinander zu entfernen wie die beiden unteren Fußelemente, so dass bei einer Belastung von oben, beispielsweise durch das Gewicht der PV-Module, die Sicherung der Stütze an dem Dränageelement automatisch verbessert wird.

Um bei der Ausgestaltung mit den erwähnten, sich kreuzenden Gelenkstreben eine Überlastung des Dränagemoduls durch einen zu großen Spreizdruck zu vermeiden, kann vorteilhaft zwischen den Gelenkstreben ein Verbindungselement angeordnet sein, welches einerseits längenveränderlich ist, so dass die Gelenkstreben platzsparend annähernd parallel und jedenfalls aneinander anliegend zusammengefaltet werden können. Andererseits ist das Verbindungselement zugfest, so dass es nach Erreichen einer bestimmten Spreizstellung eine weitere Spreizbewegung der Gelenkstreben verhindert. Beispielsweise kann das Verbindungselement durch eine Kette, ein Seil oder ein ähnlich flexibles Element gebildet werden, oder durch von zwei oder mehr Stäben, die jeweils in sich starr, aber ebenfalls gelenkig miteinander verbunden sind. Die Gelenkstreben und die erwähnten Stäbe des Verbindungselements können beispielsweise jeweils aus metallischen Flacheisen gebildet sein.

Die Fußelemente können jeweils vorteilhaft eine liegend ausgerichtete Bodenplatte aufweisen, um die Gewichtsbelastung, die auf das Dränageelement einwirkt, auf eine größere Fläche zu verteilen und so das Material des Dränageelements zu schonen. Weiterhin können die Fußelemente eine aufrecht ausgerichtete Anlageplatte aufweisen, die zur Anlage an einem Trennsteg bestimmt ist.

Die weiter oben erwähnten Profilelementen können dabei vorteilhaft an den aufrecht ausgerichteten Anlageplatten angeordnet sein, z.B. in Form eines oder mehrerer spitz endender runder Bolzen. Auf diese Weise ist sichergestellt, dass die unter dem Dränageelement befindliche Dachhaut nicht durch eine Spitze des Profilelements beschädigt wird, und außerdem wird auf diese Weise die Stütze besonders wirksam an dem Dränageelement gegen abhebende Kräfte gesichert.

Durch die Verwendung einer vorschlagsgemäßen Stütze kann das Dränageelement praktisch über seine gesamte Fläche für die Grünbepflanzung genutzt werden, denn in einer vorteilhaften Ausgestaltung des Dränageelements kann dieses frei von Befestigungskonsolen sein, die eigens zur Befestigung der Stützen vorgesehen sind.

Insbesondere kann vorteilhaft die Topographie des Dränageelements im Wesentlichen über dessen gesamte Fläche gleichmäßig ausgestaltet sein, beispielsweise lediglich mit der Ausnahme von Rand- oder Eckbereichen des Dränageelements, so dass die Aufstellung der Stützen nicht zwingend vorbestimmt und auf eine bestimmte Stelle am Dränageelement festgelegt ist. Vielmehr kann je nach den örtlichen Gegebenheiten die Anordnung der PV Module in den jeweils geeigneten Abständen zueinander erfolgen, wobei unter Verwendung gleichartiger Stützen und gleichartiger Dränageelemente unterschiedliche Abstände der PV Module zueinander verwirklicht werden können.

Ein Ausführungsbeispiel der Erfindung wird anhand der rein schematischen Darstellungen nachfolgend näher erläutert. Dabei zeigt
- Fig. 1: eine Stütze, die zur Aufnahme von PV Modulen dient, neben einem Dränageelement,
- Fig. 2: in einem größeren Maßstab als Fig. 1 ein Fußelemente der Stütze von Fig. 1, und
- Fig. 3: die Stütze von Fig. 1 in dem Dränageelement von Fig. 1.

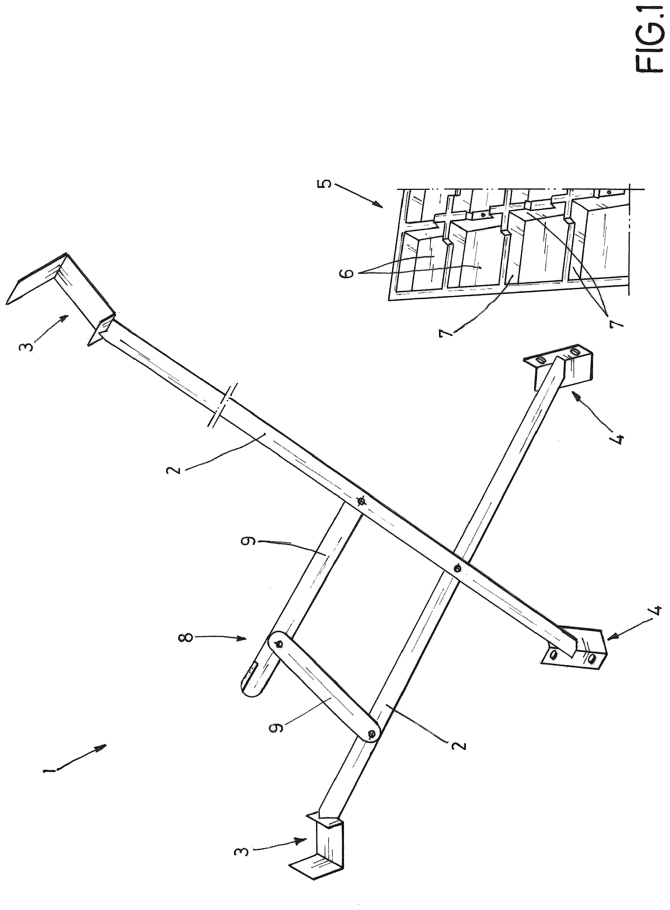

In Fig. 1 ist eine Stütze 1 dargestellt, die zwei sich kreuzende, X-förmig angeordnete, metallische Gelenkstreben 2 aufweist, die unterschiedlich lang sind. An ihren oberen Enden weisen die beiden Gelenkstreben 2 jeweils eine U-förmige Aufnahme 3 auf, deren beiden parallelen Schenkel unterschiedlich lang ausgestaltet sind. In die Aufnahmen 3 benachbarter Stützen 1 können Tragleisten eingelegt werden, auf denen dann PV-Module befestigt werden können. Alternativ zu dem dargestellten Ausführungsbeispiel können die Aufnahmen 3 auch so ausgestaltet sein, dass ein PV-Modul unmittelbar auf zwei oder mehr benachbarte Stützen 1 aufgelegt werden kann und in deren Aufnahmen 3 gehalten ist, so dass anschließend das PV-Modul direkt, ohne die Verwendung von Tragleisten, mit den Aufnahmen 3 verschraubt werden kann.

An ihren unteren Enden sind die Gelenkstreben 2 jeweils mit einem Fußelemente 4 versehen, so dass die beiden Fußelemente 4 zusammenwirkend den Fuß der Stütze 1 bilden, der zur Befestigung der Stütze 1 an einem Dränageelement 5 dient. Das in Fig. 1 dargestellten Dränageelement 5 ist als eine sogenannte Bodenplatte eines Gründachs ausgestaltet und weist eine Vielzahl von Vertiefungen 6 auf, zwischen denen Trennstege 7 verlaufen.

Die beiden Gelenkstreben 2 sind dort, wo sie sich kreuzen, gelenkig gelagert. Oberhalb dieses Gelenks sind die beiden Gelenkstreben 2 durch ein zugfestes Verbindungselement 8 miteinander verbunden, welches den maximalen Spreizwinkel der Gelenkstreben 2 begrenzt. Bei dem dargestellten Ausführungsbeispiel wird das Verbindungselement 8 durch zwei Stäbe 9 gebildet, die wie die Gelenkstreben 2 selbst als Flacheisen ausgestaltet sind. Die Stäbe 9 sind einerseits gelenkig miteinander verbunden und schließen andererseits gelenkig an die beiden Gelenkstreben 2 an. Ausgehend von der in Fig. 1 dargestellten Anordnung können die beiden Gelenkstreben 2 noch weiter gespreizt werden, so dass sich sowohl die beiden Aufnahmen 3 als auch die beiden Fußelemente 4 jeweils ihren Abstand voneinander vergrößern. Diese Spreizbewegung wird durch das Verbindungselement 8 begrenzt, wenn die beiden Stäbe 9 in geradliniger Verlängerung zueinander ausgerichtet sind.

Der längere der beiden Stäbe 9, der über das mittlere Gelenk des Verbindungselements 8 hinausragt, weist in diesem überstehenden Abschnitt einen Anschlag auf, der dem anderen Stab 9 von oben anliegt, wenn die beiden Stäbe 9 in geradliniger Verlängerung zueinander ausgerichtet sind, so dass eine weitere Bewegung der beiden Gelenkstreben 2, welche jeweils die beiden Aufnahmen 3 und die beiden Fußelemente 4 wieder einander annähern würde, vermieden wird. Auf diese Weise wird bei der Montage der Stütze 1 der gewünschte Abstand der Aufnahmen 3 zueinander sichergestellt, der später eine problemlose Montage eines PV-Moduls bzw. dessen Tragleisten auf den Stützen 1 gewährleistet. Außerdem wird so die Beibehaltung des maximalen Abstandes zwischen den beiden Fußelemente 4 erreicht, um die sichere Befestigung der Stütze 1 an dem Dränagemodul 5 zu gewährleisten.

In Fig. 1 befinden sich die Fußelemente 4 in einer Freigabestellung, in der sie nicht ihre Position einnehmen, die zur Verankerung der Stütze 1 an einem Dränageelement 5 vorgesehen ist. Vielmehr ist Stütze 1 gegenüber dem Dränageelement 5 frei beweglich. In einer möglichst platzsparenden Anordnung können die Gelenkstreben 2 noch näher, nahezu parallel, zueinander verlaufen als in Fig. 1 dargestellt. Weiterhin können die Gelenkstreben 2 noch weiter auseinandergespreizt werden als in Fig. 1, um die Fußelemente 4 in eine Haltestellung zu bringen, die eine Festlegung der Stütze 1 an dem Dränageelement 5 ermöglicht.

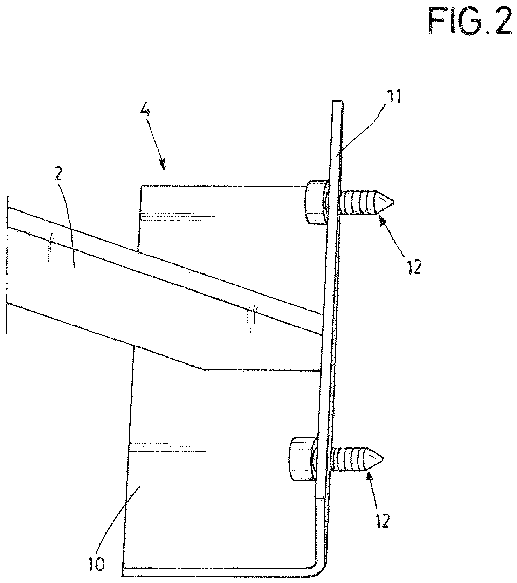

Fig. 2 zeigt im Detail die Ausgestaltung eines Fußelements 4. Das Fußelement 4 ist als Abschnitt eines L-förmigen, metallischen Winkelprofils ausgestaltet, welches an das untere Ende der zugehörigen Gelenkstreben 2 angeschweißt ist. Das Fußelement 4 bildet einerseits eine horizontal verlaufende Bodenplatte 10, die dazu bestimmt ist, in eine Vertiefung 6 des Dränageelements 5 eingestellt zu werden, sowie eine vertikal verlaufende Anlageplatte 11, die zur Anlage an einem Trennsteg 7 des Dränageelements 5 bestimmt ist. Von der Anlageplatte 11 ragen zwei Profilelemente 12 nach außen und enden jeweils in einer Spitze, so dass die Profilelemente 12 in einen Trennsteg eindringen, wenn die Anlageplatte 11 bis zu ihrem Kontakt mit einem Trennsteg 7 an den Trennsteg 7 angepresst wird. Bei dem dargestellten Ausführungsbeispiel sind die Profilelemente 12 als Schrauben ausgestaltet, weisen also ein Gewinde auf.

Abweichend von dem dargestellten Ausführungsbeispiel können die Profilelemente 12 als außen glatte Rundbolzen ausgestaltet sein, die ebenfalls in einer Spitze enden und beispielsweise an die Anlageplatte 11 angeschweißt sind.

Weiterhin kann abweichend von dem dargestellten Ausführungsbeispiel vorgesehen sein, dass das Fußelement 4 nicht an die Gelenkstrebe 2 angeschweißt ist, sondern dass vielmehr entweder an dem Fußelement 4 selbst oder an der Gelenkstrebe 2 eine Lochreihe vorgesehen ist, die mit einer Lochreihe oder zumindest einer Bohrung in dem jeweils anderen Element in der Art zusammenwirkt, dass das Fußelement 4 an dem Gelenkstrebe 2 in unterschiedlichen Anordnungen befestigt werden kann. Wenn die Stütze 1 eine bestimmte Spreizstellung einnimmt und ihre beiden Gelenkstreben 2 einen bestimmten Winkel zueinander einnehmen, kann durch diese Verstellbarkeit der Abstand der beiden Anlageplatten 11 variiert werden und beispielsweise an unterschiedlich ausgestaltete Dränageelemente 5 angepasst werden, bei denen die Vertiefungen 6 unterschiedlich groß bemessen sind und die Trennstege 7 dementsprechend unterschiedliche Abstände zueinander aufweisen.

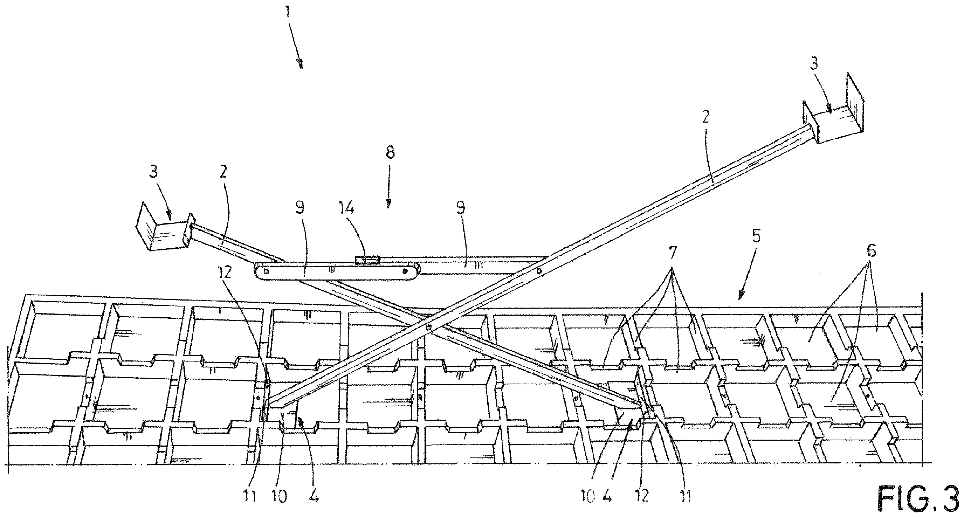

Fig. 3 zeigt die Stütze 1 in ihrer fertig montierten Gebrauchsstellung. Dadurch, dass die beiden Gelenkstreben 2 unterschiedlich lang sind, befinden sich die Aufnahmen 3 in unterschiedlicher Höhe, so dass die gewünschte Schrägstellung eines PV-Moduls erreicht wird. Weiterhin ist in Fig. 3 der oben erwähnte Anschlag erkennbar, der an dem längeren Stab 9 des Verbindungselements 8 angeordnet ist, auf dem kürzeren Stab 9 aufliegt, und mit 14 gekennzeichnet ist.

Fig. 3 verdeutlicht, wie die Fußelemente 4 mit ihren Bodenplatten 10 auf der Bodenfläche einer Vertiefung aufstehen und mit ihren Anlageplatten 11 zwei voneinander getrennten Trennstegen 7 anliegen. Die Profilelemente 12 sind dabei in die betreffenden Trennstege 7 eingedrungen, bewirken einen formschlüssigen Halt der Stütze 1 an dem Dränageelement 5 und sichern so die Stütze 1 gegen abhebende Kräfte.

### Bezugszeichen:

- 1: Stütze
- 2: Gelenkstrebe
- 3: Aufnahme
- 4: Fußelement
- 5: Dränageelement
- 6: Vertiefung
- 7: Trennsteg
- 8: Verbindungselement
- 9: Stab
- 10: Bodenplatte
- 11: Anlageplatte
- 12: Profilelemente
- 14: Anschlag

## Patentansprüche

1. Stütze (1), die dazu bestimmt ist, ein Photovoltaik-Modul auf einem Gründach zu tragen, welches mit Rippen und / oder Vertiefungen aufweisenden Drainageelementen (5) ausgestattet ist,
wobei die Stütze (1) einen auf einem Drainageelement (5) aufstellbaren Fuß aufweist
sowie zwei Aufnahmen (3), die zur Aufnahme eines Photovoltaik-Moduls oder zur Aufnahme von Modultragleisten bestimmt sind,
**dadurch gekennzeichnet,**
**dass** der Fuß zwei relativ zueinander bewegliche Fußelemente (4) aufweist, die zwischen einer Haltestellung und einer Freigabestellung beweglich sind,
wobei die Fußelemente (4) dazu bestimmt sind, in ihrer Haltestellung die Stütze (1) gegen abhebende Kräfte sichernd an einem Drainageelement (5) festzulegen und in ihrer Freigabestellung eine freie Beweglichkeit der Stütze (1) in Bezug auf das Drainageelement (5) zu ermöglichen.

2. Stütze nach Anspruch 1,
**dadurch gekennzeichnet,**
**dass** die Fußelemente (4) jeweils wenigstens ein vorspringendes Profilelement (12) aufweisen, das zur Anlage an dem Drainageelement (5) bestimmt ist.

3. Stütze nach Anspruch 2,
**dadurch gekennzeichnet,**
**dass** das Profilelement (12) eine Spitze aufweist, die zum Eindringen in das Material des Drainageelements (5) bestimmt ist.

4. Stütze nach einem der vorhergehenden Ansprüche,
**dadurch gekennzeichnet,**
**dass** die Fußelemente (4) in der Art beweglich sind, dass sie in einer Spreizbewegung, den Abstand zueinander vergrößernd, an dem Drainageelement (5) festlegbar sind.

5. Stütze nach Anspruch 4,
**dadurch gekennzeichnet,**
**dass** die Fußelemente (4) gelenkig miteinander in der Art verbunden sind, dass durch einen von oben auf die Stütze (1) einwirkenden Druck die Fußelemente (4) gespreizt werden.

6. Stütze nach einem der vorhergehenden Ansprüche,
**dadurch gekennzeichnet,**
**dass** die Fußelemente (4) mit den Aufnahmen (3) durch sich kreuzende Gelenkstreben (2) verbunden sind.

7. Stütze nach Anspruch 6,
**dadurch gekennzeichnet,**
**dass** zwischen den Gelenkstreben (2) ein längenveränderliches, zugfestes und den maximalen Spreizwinkel der Gelenkstreben (2) begrenzendes Verbindungselement (8) verläuft.

8. Stütze nach einem der vorhergehenden Ansprüche,
**dadurch gekennzeichnet,**
**dass** die Fußelemente (4) jeweils eine liegend ausgerichtete Bodenplatte (10) und eine aufrecht ausgerichtete Anlageplatte (11) aufweisen.

9. Stütze nach einem den Ansprüchen 2 und 8,
**dadurch gekennzeichnet,**
**dass** die Profilelemente (12) an den Anlageplatten (11) der Fußelemente (4) angeordnet sind.

10. Gründach-Unterkonstruktion für ein Photovoltaik-Modul, mit einer Stütze (1) nach einem der vorhergehenden Ansprüche,
und mit einem Drainageelement (5), welches eine mit Rippen und / oder Vertiefungen (6) versehene Topographie aufweist.

11. Gründach-Unterkonstruktion nach Anspruch 10,
**dadurch gekennzeichnet,**
**dass** das Drainageelement (5) frei von einer speziellen Konsole ist, die zur Befestigung eines oder mehrerer Fußelemente (4) bestimmt ist.

12. Gründach-Unterkonstruktion nach Anspruch 11,
**dadurch gekennzeichnet,**
**dass** die Topographie des Drainageelements (5) im Wesentlichen über dessen gesamte Fläche gleichmäßig ausgestaltet ist.
